(19) Europäisches Patentamt
European Patent Office
Office européen des brevets

(11) **EP 3 390 809 B1**

(12) **EUROPEAN PATENT SPECIFICATION**

(45) Date of publication and mention
of the grant of the patent:
**01.09.2021 Bulletin 2021/35**

(21) Application number: **16874968.7**

(22) Date of filing: **13.12.2016**

(51) Int Cl.:
*F03B 7/00* (2006.01)     *E02B 9/00* (2006.01)

(86) International application number:
**PCT/FI2016/050868**

(87) International publication number:
**WO 2017/103327 (22.06.2017 Gazette 2017/25)**

(54) **HYDROELECTRIC POWER PLANT**

WASSERKRAFTWERK

CENTRALE HYDROÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2015  FI 20155969
03.05.2016  FI 20165379**

(43) Date of publication of application:
**24.10.2018 Bulletin 2018/43**

(73) Proprietor: **O. Timoniemi OY
91600 UTAJÄRVI (FI)**

(72) Inventor: **TIMONIEMI, Olavi
91600 UTAJÄRVI (FI)**

(74) Representative: **Berggren Oy
P.O. Box 16
Eteläinen Rautatiekatu 10A
00101 Helsinki (FI)**

(56) References cited:
**WO-A1-2011/046060      JP-A- 2011 163 247
US-A- 5 905 312**

## Description

The invention relates to a hydroelectric power plant, in which electric current is generated by making use of the hydrostatic pressure of water.

## State of the art

Hydroelectric power plants have been built already for decades. A conventional hydroelectric power plant is built to a place, to which water can be led from a dammed water reservoir for rotating a water turbine located below the reservoir. Flowing water is guided to the blades of the rotor of the turbine, to which water generates a power, which makes the water turbine to rotate around its axis. The water turbine converts the hydrostatic pressure of water (potential energy) into rotational energy for its axis and further into rotational energy for the generator.

Environmental impacts of a conventional hydroelectric power plant are big. Usually, a large-scale dam construction has to be built, by means of which water level is raised sufficiently high in order to increase the utilizable potential energy of water in a sufficient manner. Due to damming, a reservoir is formed above the conventional hydroelectric power plant, underneath of which there remains soil previously used for other purposes.

Waterway below the power plant may again be scant of water for some distance, when the power plant is not used with full power.

Investment costs in a conventional hydroelectric power plant are high, because building the dam requires a lot of time and work.

Document JP 2011163247 A discloses a hydroelectric power plant according to the preamble of claim 1.

## Object of the invention

The purpose of the invention is to present a hydroelectric power plant, the environmental hazards and investment costs of which are small compared with conventional hydroelectric power plants.

The objects of the invention are achieved by a hydroelectric power plant according to claim 1. The water required by the actual hydroelectric power plant is fed along a supply water pipe to a place, which is geographically located lower than the source of the water supply. The diameter of the supply pipe is determined by the quantity of water needed by the hydroelectric power plant. The hydroelectric power plant is transformable on the basis of hydro energy available and/or electric power to be generated.

It is an advantage of the hydroelectric power plant of the invention that the environmental hazards caused by the construction of the power plant are minimized and that it is in accordance with sustainable development.

In addition, it is an advantage of the invention that the size of the hydroelectric power plant and its production capacity of electricity can be modified according to need.

It is a further advantage of the invention that by chaining hydroelectric power plants of the invention, for example, through several built-up areas, it is possible to utilize hydroelectric power in a flexible manner and with good coefficient of efficiency.

It is a further advantage of the invention that it does not require flowing water.

It is a further advantage of the invention that it does not harm fish or prevent their movement in natural waters.

It is a further advantage of the invention that the hydroelectric power plant of the invention is scalable according to the object of use.

Further, it is an advantage of the invention that it does not require large waterways in the immediate vicinity of the production area and that it can be built close to densely populated areas.

The hydroelectric power plant arrangement and hydroelectric power plant of the invention are characterized in what is disclosed in the independent patent claim.

Some advantageous embodiments of the invention are disclosed in the dependent patent claims.

The basic idea of the invention is: In the hydroelectric power plant arrangement of the invention the waterway used as the water source is not formed, for example, by using a dam or a new flow channel. In the hydroelectric power plant arrangement of the invention water used in the power plant is led to the actual power plant directly via a supply pipe from a waterway preferably in a natural state. The first end of the supply water pipe is in the waterway and the second end in the hydroelectric power plant of the invention. The location of the hydroelectric power plant is chosen so that there is a sufficient difference in altitude between the first and second end of the supply water pipe. This difference in altitude generates a hydrostatic pressure causing the water to flow from the utilizable waterway to the hydroelectric power plant of the invention through the supply pipe. The length of the supply water pipe can be from hundreds of metres to tens of kilometres. It is also possible to chain several hydroelectric power plants of the invention. Chained hydroelectric power plants of the invention can be placed close to population centres.

In the hydroelectric power plant of the invention, a modified watermill is rotated by water flowing into it. The watermill of the invention has several troughs, which are coupled one after another at least to two parallel chains. The parallel chains are configured to move in the vertical direction down on the first side of the watermill and up on the second side of the watermill. In order to make possible the up-and-down movement, the parallel chains are configured to travel over at least two cogwheels.

Troughs filled with water entering the power plant move downwards in the watermill by impact of gravitation. The troughs are drained in the bottom dead centre of the movement of the watermill chains. After this the empty troughs rise upwards all the way to the top dead centre of the movement of the watermill chains, where they are again filled with water coming to the power plant. The filling and draining phases create a continuous movement of the chains, which simultaneously rotates the gearwheels supporting the chains. Each gearwheel is coupled fixedly into its own shaft, which is rotated by the movement of the chains.

In the hydroelectric power plant of the invention, the mechanical stress of the chains and the gearwheels supporting them is reduced by a special gearwheel arrangement, which is coupled to at least one side of the watermill.

An electric generator is coupled to at least one rotating shaft of the watermill for generating electricity.

The invention will next be explained in detail. In the specification, reference is made to the attached drawings, in which

Figure 1 illustrates in an exemplary manner a hydroelectric power plant arrangement of the invention;

Figure 2a illustrates in an exemplary manner some main components of a hydroelectric power plant of the invention;

Figure 2b illustrates in an exemplary manner a water trough and its coupling means used in a hydroelectric power plant of the invention;

Figure 3 illustrates in an exemplary manner a cogwheel arrangement of the invention;

Figure 4a illustrates in an exemplary manner a watermill power plant of the invention seen from the lateral direction; and

Figure 4b illustrates in an exemplary manner a second watermill power plant of the invention seen from the lateral direction.

The embodiments in the following description are only exemplary, and one skilled in the art can carry out the basic idea of the invention also in some other way than the one depicted in the description. Although reference can be made to an embodiment or embodiments in several places of the description, this does not mean that the reference would only be targeted at the one embodiment described, or that the described feature would only be feasible in the one embodiment described. Individual features of two or several embodiments can be combined and thus achieve new embodiments of the invention.

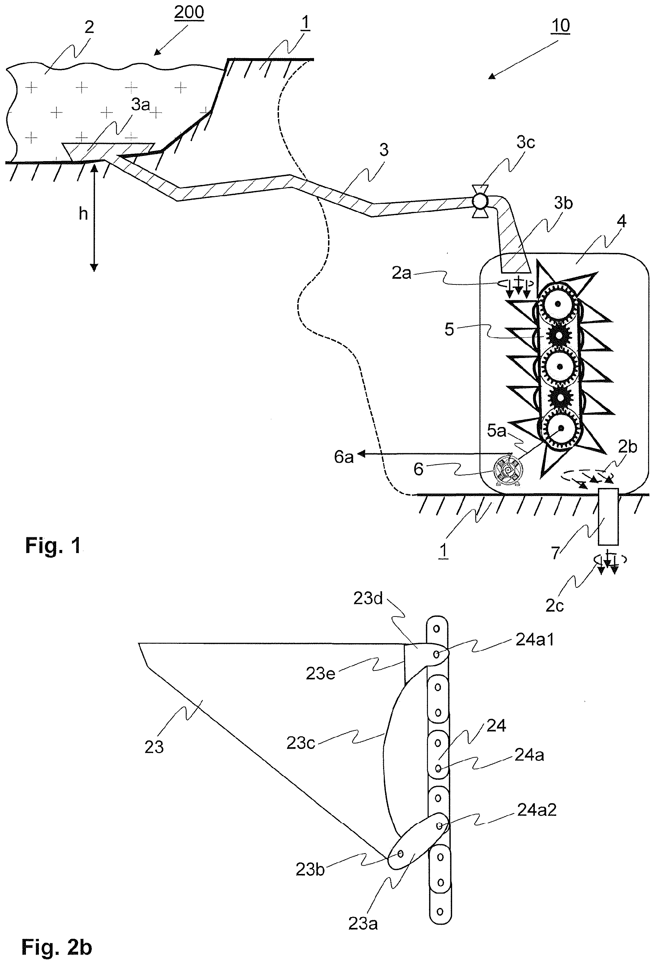

**Figure 1** illustrates in an exemplary manner the operation principle of the hydroelectric power plant arrangement 10 of the invention. In the hydroelectric power plant arrangement 10 of the invention it is advantageously not necessary to change or modify the waterway 200 in any way. The waterway 200 can be, for example, a lake, pond or a free flowing river. In Figure 1, the ground surface surrounding the waterway 200 and the hydroelectric power plant 4 of the invention is marked with reference 1.

The supply water pipe 3 leading to the hydroelectric power plant 4 of the invention runs for most of the way advantageously below the soil frost limit. The supply water pipe 3 can contain rises and falls caused by the shape of the terrain. The supply water pipe 3 has advantageously at least one valve 3c, with which the flow rate of water 2 towards the hydroelectric power plant 4 can be adjusted or the water flow can be stopped entirely.

The length and diameter of the supply water pipe 3 vary according to the size of the hydroelectric power plant. The length of the supply water pipe 3 can be from a few hundreds of metres to tens of kilometres, depending on the difference in altitude h between the source of water supply and the installation site of the hydroelectric power plant 4 or the planned electric power of the hydroelectric power plant 4. A small difference in altitude h and a supply water pipe 3 with a small diameter are enough for a small hydroelectric power plant 4 of the invention. A hydroelectric power plant 4 with bigger power requires a bigger difference in altitude h and a supply water pipe 3 with a bigger diameter.

Water 2 is led from the waterway 200 to the hydroelectric power plant 4 of the invention via the supply water pipe 3. From the first end 3a of the supply water pipe 3, water is transferred by impact of gravitation to the supply water pipe 3 and from its second end 3b inside the building of the hydroelectric power plant 4 (reference 2a), because the hydroelectric power plant 4 is located lower than the first end 3a of the supply water pipe 3 by the difference in altitude h. The difference in altitude h defines how big the potential energy is at the first end of the supply water pipe 3, for example, with water on the distanced of one metre in the initial situation. When the diameter of the supply water pipe 3 is known, the potential energy $W_{pot}$ at the first end 3a of the pipe can be calculated with the formula (1)

$$W_{pot} = 1/2mgh \qquad\qquad (1),$$

in which m is the mass of water, for example, on the distance of one metre at the first end 3a of the supply water pipe 3, g is the acceleration of gravitation and h is the difference in altitude between the first end 3a and second end 3b of the supply water pipe 3.

Water flow in the supply water pipe 3 is not frictionless so that friction generated in the supply water pipe 3 reduces the energy of water coming to the hydroelectric power plant 4 which is utilizable as electric power in the energy conversion elements of the hydroelectric power plant 4 of the invention. The energy conversion elements include a watermill 5, the electric generator 6 being rotated by using the at least one rotating shaft 5a of the watermill 5. The electric current 6a generated by the electric generator 6 is led to the object of use.

Water discharging from the watermill 5 (references 2b, 2c) is advantageously guided to the waterway via the discharge pipe 7, which waterway can be part of the same waterway, from which water was originally led to the hydroelectric power station 4 of the invention.

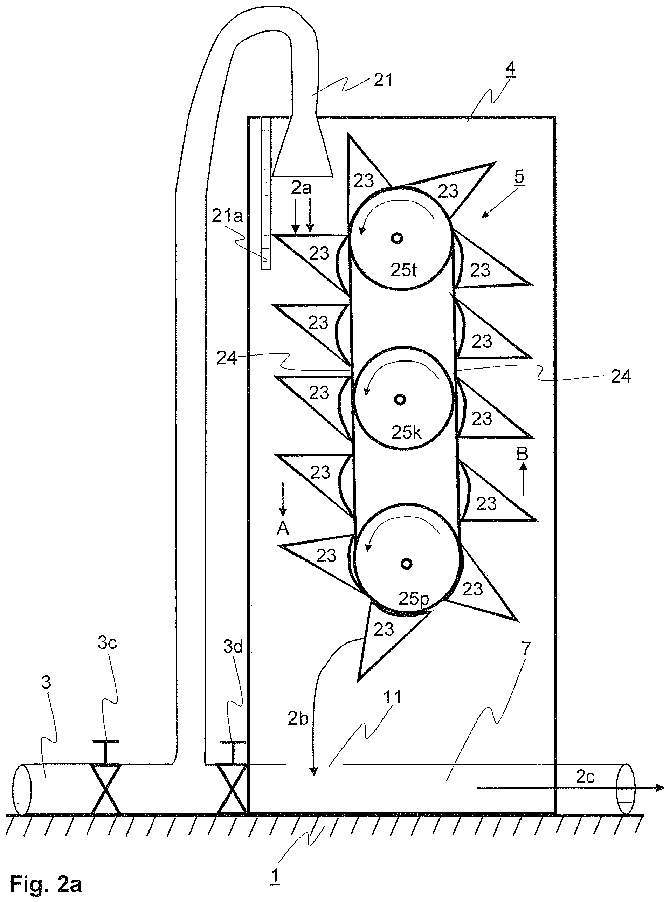

**Figure 2a** illustrates in principle a structure of the hydroelectric power plant 4 of the invention.

Water used in the hydroelectric power plant 4 is led to an operating pipe branch in the supply water pipe 3 by opening a closing valve 3c. In use, the bypass valve 3d is closed. The bypass valve 3d is opened, for example, when maintenance work is carried out in the hydroelectric power plant 4 of the invention.

In use, water 2a is discharged from the operating pipe branch 21 to the trough 23 by the filling station in the upper part of the watermill 5. In an advantageous embodiment, the filling up of the trough 23 is controlled advantageously with a flexible water control unit 21a with a dimension equal to the width of the trough 23. The bypass of water 2a is minimized during the filling up of the trough 23 by means of the water control unit 21a.

Each of the troughs 23 of the hydroelectric power plant 5 is advantageously attached to at least two parallel closed chains 24 by two pivoted joints. The movement of the chains 24 in the direction A on the first side of the watermill and direction B on the second side of the watermill is made possible by gearwheels 25t, 25k and 25p in the watermill, over which the chains 24 travel. The movement of the closed chains 24 rotates the gearwheels 25t, 25k and 25p to the same direction. The length of the closed chains 24 defines how many troughs 23 it is possible to use in the watermill 5. The number of troughs 23 also has an impact on the electric power to be obtained from the watermill 5 of the invention.

When a trough 23 is at the filling point of the watermill 5, the mass of water 2a coming to the trough 23 makes the trough 23 filled up with water to move downwards on chains 24 (direction A). Then the next empty trough 23 arrives at the said filling point of the troughs from the gearwheel 25t in the upper part of the watermill 5. During and after the filling of the arrived trough it also moves to direction A.

Each of the troughs 23 filled with water arrives in due course to the gearwheel 25p at the lower end of the watermill 25. Then the position of the trough 23 changes so that the water in it is discharged (reference 2b) to the discharge pipe 7 of the hydroelectric power plant 4 through an opening 11. The spent water 2c is led to an appropriate waterway by means of the discharge pipe 7.

After having been drained of water and having passed by the gearwheel 25p, each trough 23 rises upwards empty (direction B). The difference in weight of the troughs 23 on the first and second side of the watermill 5 creates a rectilinear movement of the chain 24, which can be used to rotate the electric generator coupled to the watermill 5 (Figure 1).

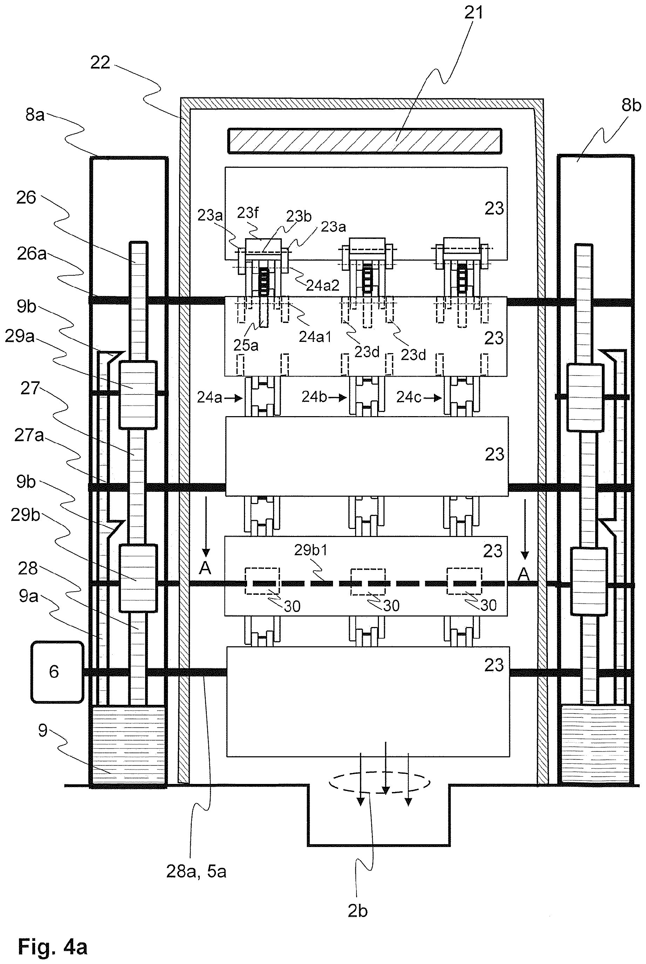

In **Figure 2b** there is illustrated an advantageous way for coupling the trough 23 of the hydroelectric power plant 5 of the invention to one exemplary chain 24. An example of the use of this way of coupling is disclosed in Figure 4a. Similar couplings are made from the trough 23 to each parallel chain utilizable in the watermill 5 (Figure 4a, references 24a, 24b and 24c).

In order to make the troughs 23 travel flexibly over the gearwheels 25t and 25p in the top and bottom dead centres of the chain 24, the troughs 23 are attached pivotably to each utilizable chain 24, for example, in the following manner.

The wall 23c of the trough 23 against the chain 24 is shaped to be curved. The radius of curvature of the shaped wall 23c is essentially equal to the radius of the gearwheels 25t and 25p.

In addition to the curvature of the wall 23c, first articulated elements 23d are connected to the upper part 23e of the trough 23, the articulated elements being coupled to the first chain pin 24a1 on both sides of the chain 24. The swivel joint between the first chain pin 24a1 and the first articulated elements 23d makes it possible to change the position of the chain 24 in relation to the trough 23 by means of the first articulated elements 23d. The first articulated elements function as bearing elements for the upper part of the trough 23.

In the lower part of the trough 23 there are second articulated elements, by means of which, as the wall 23c of the trough 23 presses either against the gearwheel 25t of the top dead centre or the gearwheel 25p of the bottom dead centre 25p of the chain 24, more length is gained for the chain 24 coming against the wall 23c of the trough 23 so that the chain 24 is made to press against the curved wall 23c of the trough 23. The second articulated elements comprise a connection piece 23a advantageously on both sides of the chain 24. The first ends of the connection pieces 23a are coupled rotatably to the chain pin 24a2 on both sides of the chain 24. The second ends of the connection pieces 23a are coupled rotatably to a fixing device 23f (Figure 4a) in the lower part of the trough 23 by the joint pin 23a. The second articulated elements function as bearing elements for the lower part of the trough 23.

In the way described above, each trough 23 of the watermill 5 is attached to each chain 24a, 24b and 24c in the watermill 5.

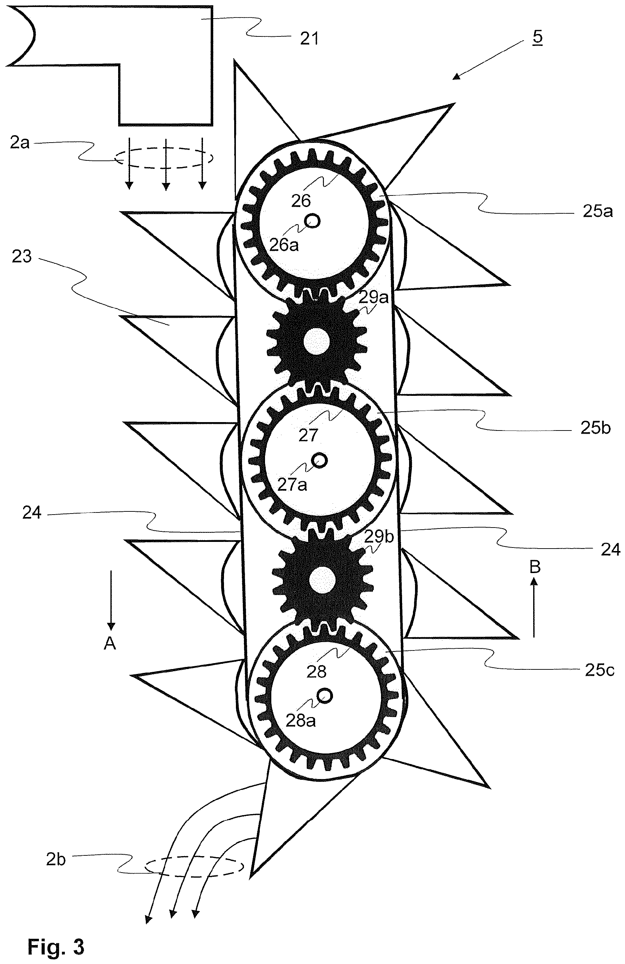

In **Figure 3** there is illustrated a gearwheel arrangement, by means of which the load of the chains 24 of the watermill 5 of the invention and the gearwheels supporting these is lightened. The coupling arrangement is advantageously located either on both sides or only on one side of the watermill 5.

In the coupling arrangement of the invention in Figure 3, load relief gearwheels (26, 27, 28) are attached to the gearwheel shafts 26a, 27a and 28a moving the chains 24. The movement of the load relief gearwheels 26, 27 and 28 in relation to each other is standardized by two auxiliary gearwheels 29a and 29b in the example of Figure 3. The auxiliary gearwheels 29a and 29b are bearing-mounted to the support structures of the watermill 5 of the invention. The auxiliary gearwheel 29a is between the gearwheels 26 and 27. And the auxiliary gearwheel 29b is between the gearwheels 27 and 28.

By means of the coupling arrangement of the invention, part of the load generated by the troughs 23 to the chains and gearwheels 25t, 25k and 25p guiding the chains 24 is transferred to the load relief gearwheels 26, 27 and 28 used in the coupling arrangement. In this case the elongation of the chains 24 and the wear of the gearwheels 25t, 25k and 25p moving the chains can be reduced.

In **Figure 4a** there is illustrated an entity consisting of the watermill 5 and electric generator 6 according to one advantageous embodiment of the invention as a partial cross-sectional view, seen from the first side of the watermill 5. In the example in the figure, the electric generator 6 is coupled to the shaft 28a of the lowermost gearwheel 25p (reference 5a in Figure 1).

On the first side of the watermill 5 of the invention, the direction of motion of the troughs 23 is downwards. The direction of motion is depicted by two arrows "A". In the exemplary watermill in Figure 4a, three parallel chains 24a, 24b and 24c are used, to which the troughs 23 are attached.

In Figure 4a, connection elements have been outlined in the figure for the part of two uppermost troughs, the trough 23 being attached to the chains 24a, 24b and 24c by the connection elements. Also the other troughs 23 are attached to the chains 24a, 24b and 24c by similar connection elements.

In the upper part of the second uppermost trough 23 there are illustrated first articulated elements 23d, which are connected to the first chain pin 24a1 on both sides of the chain 24a. The rotating connection between the first chain pin 24a1 and the first articulated elements 23d makes it possible to change the position of the chain 24 in relation to the first articulated elements 23d. In this case, the first articulated elements function as bearing elements for the trough 23.

In the lower part of the uppermost trough 23 of Figure 4a there are illustrated second articulated elements, by means of which, as the wall 23c of the trough 23 presses against the gearwheel 25t of the top dead centre in the example, more length is gained to the chain 24a coming against the wall 23c of the uppermost trough 23 so that the chain 24a is made to press against the curved wall 23c of the trough 23. The second articulated elements also comprise a coupling piece 23a advantageously on both sides of the chain 24a. The first ends of the coupling pieces 23a are rotatably coupled to the chain pin 24a2 on both sides of the chain 24. The second ends of the coupling pieces 23a are rotatably attached to the fastening piece 23f in the lower part of the trough by means of the joint pin 23a. The second articulated elements then function as the bearing elements for the lower part of the trough 23.

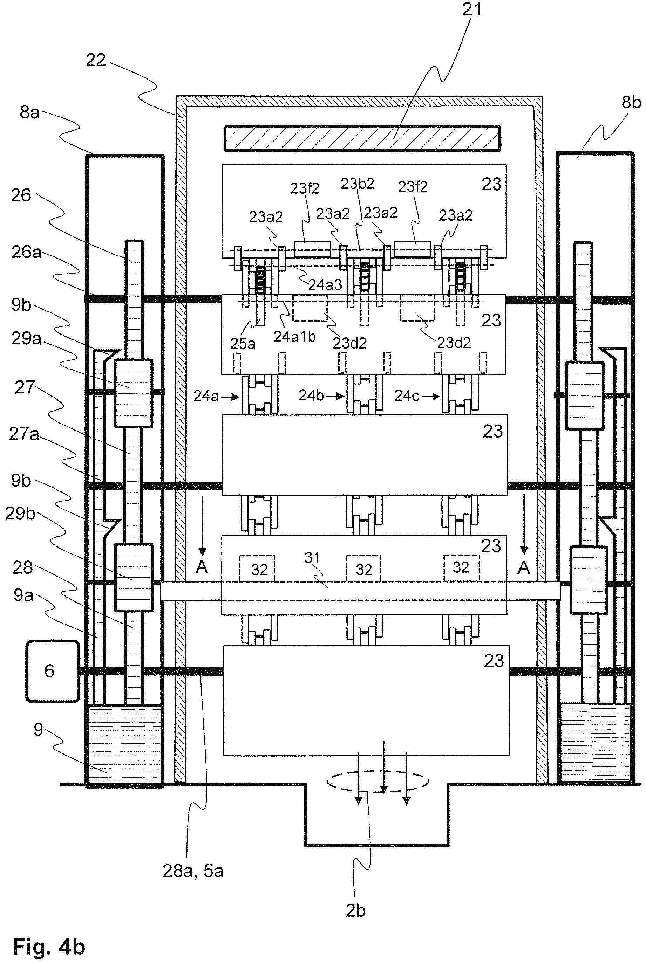

In the example of Figure 4a, water is fed to the watermill from the operating pipe branch 21. In the example of Figure 4, the actual watermill 5 is enclosed by a closed casing 22. The casing 22 is used to guide water 2b discharging from the watermill up to the water discharge pipe 7.

The support structures of the watermill 5 of the invention are illustrated with references 8a and 8b. In the example of Figure 4a, the support structures 8a and 8b are enclosed structures. In the two opposite walls of the support structures 8a and 8b there are the bearings for the shafts 26a, 27a and 28a of the gearwheels and for the shafts of the auxiliary gearwheels 29a and 29b.

In Figure 4a there is also illustrated the lubrication arrangement for the load relief gearwheels 26, 27 and 28 and the auxiliary gearwheels 29a and 29b. The lowermost load relief gearwheel 28 rotates in the lubricating oil trough 9. From this trough, lubricating oil is pumped by a pump (not shown in Figure 4a) to both auxiliary gearwheels 29a and 29 from the nozzles 9b via the supply pipe 9a.

In an advantageous embodiment of the invention, the gearwheel arrangement of Figure 3 is installed on both sides of the watermill 5. In this embodiment the cogwheels 29a and 29b on different sides of the watermill advantageously have a common rotation axis extending through the watermill 5. In the example of Figure 4a, the gearwheels 29b on both sides of the watermill 5 have a common rotation axis 29b1.

In an advantageous embodiment of the invention, clamping elements 30 for the chain 24 are coupled to this common rotation axis 29b1 on that side of the watermill 5, in which the troughs 23 rise upwards empty (direction "B"). Each chain 25a, 25b and 25c advantageously have their own clamping elements 30.

In the example of Figure 4a, the support structures 8a and 8b disclosed above are located on both sides of the watermill of the invention. It is obvious for one skilled in the art that, for example, the support structure 8b can be replaced with a structure, which does not have cogwheels or a lubricating oil arrangement.

In **Figure 4b** there is illustrated an entity consisting of the watermill 5 and electric generator 6 according to a second advantageous embodiment of the invention as a partial cross-sectional view, seen from the first side of the watermill 5.

Also on the first side of the watermill 5 according to this embodiment, the direction of motion of the troughs 23 is downwards. The direction of motion is illustrated with two arrows "A". In the exemplary watermill of Figure 4b, advantageously three parallel chains 24a, 24b and 24c are used, to which the troughs 23 are attached. In the embodiment of Figure 4b, advantageously at least those chain pins 24a1b and 24a3, with which the articulated elements of the troughs 23 are attached to the chains, are so long that they extend from the chain 24a on the left-hand side all the way to the chain 24c on the right-hand side in Figure 4b.

In the example of Figure 4b, connection elements for connecting the trough 23 to the chains 24a, 24b and 24c are outlined in Figure 4b for the part of the two uppermost troughs 23. Also the other troughs 23 are attached to the chains 24a, 24b and 24c by similar connection elements.

In the upper part of the second uppermost trough 23 there is illustrated a third embodiment of the articulated elements, in which the third articulated elements 23d2 are coupled to the long first chain pin 24a1b connecting the chains 24a, 24b and 24c in each chain gap. The rotating joint between the long first chain pin 24a1b and the third articulated elements 23d2 makes it possible to change the position of the chains 24a, 24b and 24c in relation to the third articulated elements 23d2. The third articulated elements then function as bearing elements for the upper part of the trough 23.

In the lower part of the uppermost trough 23 of Figure 4b there are illustrated the fourth articulated elements, by means of which, as the wall 23c of the trough 23 presses against the gearwheel 25t of the top dead centre in the example, more length is gained for the chains 24a, 24b and 24c coming against the wall 23c of the uppermost trough 23 in the figure so that the chains 24a, 24b and 24c are made to press against the curved wall 23c of the trough 23.

The fourth articulated elements advantageously comprise a second fastening piece 23f2 always between two parallel chains, for example, between the chains 24a and 24b in Figure 4b. The first ends of the second connection pieces 23a2 are rotatably coupled to the long chain pin 24a3 on both sides of the chains 24a, 24b and 24c. The second ends of the second connection pieces 23a2 are rotatably coupled to the second fastening pieces 23f2 between the chains 24a, 24b and 24c in the lower part of the trough 23 by one long joint pin 23b2. The fourth articulated elements then function as bearing elements for the trough 23.

In the advantageous embodiment of Figure 4b, the clamping elements 32 for the chains 24a, 24b and 24c are attached to a separate support beam 31, the first end of which is attached to the support structure 8a and the second end to the support structure 8b. The support beam 31 is installed close to that side of the watermill 5, in which the troughs 23 rise upwards empty (direction "B"). Each chain 24a, 24b and 24c of the watermill 5 preferably has its own clamping element 32.

Above there are illustrated some advantageous embodiments of the hydroelectric power plant of the invention. The invention is not limited to the illustrated solutions, but the inventional idea can be applied in many ways within the limits defined by the patent claims.

**Claims**

1. A hydroelectric power plant (4) for converting hydrostatic water pressure into electric energy, the hydroelectric power plant (4) comprising:

   - a supply water pipe (3)
   - two support structures (8a, 8b) for the hydroelectric power plant (4)
   - troughs (23) moving to the same direction between the support structures (8a, 8b), the troughs being open from one side and configured to move in a closed circle essentially in vertical direction, the troughs being configured to be filled with water (2a) in a top dead centre of the vertical movement of the troughs (23) and to be drained from water (2b) in a bottom dead centre of the vertical movement of the troughs
   - bearing means (23a, 23b, 23d, 24a1, 24a2) for attaching an individual trough (23) in an articulated manner to at least two parallel chains (24a, 24b, 24c)
   - at least two parallel chains (24a, 24b, 24c), parallel gearwheels (25a, 25b, 25c) and rotating shafts (26a, 27a, 28a), wherein the parallel chains (24a, 24b, 24c) are installed to said parallel gearwheels (25a, 25b, 25c), which are installed in a fixed manner to said rotating shafts (26a, 27a, 28a) so that the vertical movement of the parallel chains (24a, 24b, 24c) is configured to rotate the gearwheels (25a,25b, 25c) supporting these and said rotating shafts (26a, 27a, 28a)

- a first end of the rotating shafts (26a, 27a, 28a) is bearing-mounted to a first support structure (8a) of the hydroelectric power plant and a second end to a second support structure (8b), and

- a stator shaft of an electric generator (6) is attached to at least one rotating shaft (26a, 27a, 28a), **characterized in that** at least at the first end of each rotating shaft (26a, 27a, 28a) there are provided load relief gearwheels (26, 27, 28), which are configured to rotate together by means of auxiliary gearwheels (29a, 29b) for reducing the load of the parallel chains (24a, 24b, 24c) moving in the vertical direction.

2. The hydroelectric power plant according to claim 1, **characterized in that** a wall (23c) located against the parallel chains (24a, 24b, 24c) of the troughs (23) is curved, and that a radius of curvature of the wall (23c) is essentially equal to a radius of curvature of the gearwheels (25a, 25b, 25c).

3. The hydroelectric power plant according to claim 2, **characterized in that** in the trough (23) there are provided

   - first articulated elements (23d) in an upper part of the trough, which are coupled to one joint of the closed chain (24) with a first chain pin (24a1)
   - second articulated elements (23a, 23f) in a lower part of the trough, which are coupled rotatably to the trough with a joint pin (23b), and that
   - the second articulated elements of the lower part of the trough are configured to be coupled to the said closed chain (24) with a second chain pin (24a2) so that as the closed chain (24) passes by the top or bottom dead centre of the chain (24), the closed chain (24) is configured to press against the curved wall (23c) of the trough (23).

4. The hydroelectric power plant according to claim 2, **characterized in that** in the trough (23) there are provided

   - third articulated elements (23d2) in the upper part of the trough, which are coupled to one joint of the closed chains (24a, 24b, 24c) with one long first chain pin (24a1b)
   - fourth articulated elements (23a2, 23f2) in the lower part of the trough, which are rotatably coupled to the trough with one long joint pin (23b2), and that
   - the fourth articulated elements of the lower part of the trough are configured to be coupled to the closed chains (24a, 24b, 24c) with one long second chain pin (24a3) so that as the closed chains (24a, 24b, 24c) pass by the top or bottom dead centres of the chains (24a, 24b, 24c), the closed chains (24a, 24b, 24c) are configured to press against the curved wall (23c) of the trough (23).

5. The hydroelectric power plant according to claim 1, **characterized in that** the support structures (8a, 8b) for the hydroelectric power plant (4) are closed and that there is a lubricating oil tank (9) provided in their lower section, from which lubricating oil is configured to be pumped to at least each auxiliary gearwheel (29a, 29b) by lubricating oil supply elements (9a, 9b).

6. The hydroelectric power plant according to claim 1, **characterized in that** chain clamping elements (30, 32) are coupled to the shaft (29b1) of at least one auxiliary gearwheel (29b) or a separate support beam (31) of the shaft (29b1) for clamping the closed chains (24, 24a, 24b, 24c) during the rise of the troughs (23).

7. The hydroelectric power plant according to claim 1, **characterized in that** at a second end of a supply water pipe (3) after an operating pipe branch (21) there is provided a bypass valve (3d) for directing the water coming to the hydroelectric power plant (4) past the hydroelectric power plant (4) to the discharge pipe (7).

**Patentansprüche**

1. Wasserkraftwerk (4) zum Umwandeln von hydrostatischem Wasserdruck in elektrische Energie, wobei das Wasserkraftwerk (4) Folgendes umfasst:

   - eine Wasserversorgungsleitung (3)
   - zwei Tragstrukturen (8a, 8b) für das Wasserkraftwerk (4)
   - sich in die gleiche Richtung bewegende Mulden (23) zwischen den Tragstrukturen (8a, 8b), wobei die Mulden von einer Seite offen und dazu konfiguriert sind, sich in einem geschlossenen Kreis im Wesentlichen in vertikaler Richtung zu bewegen, wobei die Mulden so konfiguriert sind, dass sie in einem oberen Totpunkt der vertikalen Bewegung der Mulden (23) mit Wasser gefüllt werden (2a) und Wasser (2b) in einem unteren Totpunkt der vertikalen Bewegung der Mulden abzulassen

- Lagermittel (23a, 23b, 23d, 24a1, 24a2) zur gelenkigen Befestigung einer einzelnen Mulde (23) an mindestens zwei parallelen Ketten (24a, 24b, 24c)

- mindestens zwei parallele Ketten (24a, 24b, 24c), parallele Zahnräder (25a, 25b, 25c) und rotierende Wellen (26a, 27a, 28a),

wobei die parallelen Ketten (24a, 24b, 24c) an den parallelen Zahnrädern (25a, 25b, 25c) angebracht sind, die fest an den rotierenden Wellen (26a, 27a, 28a) angebracht sind, so dass die vertikale Bewegung der parallelen Ketten (24a, 24b, 24c) konfiguriert ist, um die Zahnräder (25a, 25b, 25c) zu drehen, die diese und die rotierenden Wellen (26a, 27a, 28a) tragen,

- ein erstes Ende der rotierenden Wellen (26a, 27a, 28a) an einer ersten Tragstruktur (8a) des Wasserkraftwerks und ein zweites Ende an einer zweiten Tragstruktur (8b) gelagert ist, und

- eine Statorwelle eines elektrischen Generators (6) an mindestens einer rotierenden Welle (26a, 27a, 28a) befestigt ist,

**dadurch gekennzeichnet, dass** zumindest am ersten Ende jeder rotierenden Welle (26a, 27a, 28a) Entlastungszahnräder (26, 27, 28) vorgesehen sind, die mittels Hilfszahnrädern (29a, 29b) zur Reduzierung der Belastung der sich in vertikaler Richtung bewegenden parallelen Ketten (24a, 24b, 24c) gemeinsam drehbar ausgebildet sind.

2. Wasserkraftwerk nach Anspruch 1, **dadurch gekennzeichnet, dass** eine gegen die parallelen Ketten (24a, 24b, 24c) der Mulden (23) liegende Wand (23c) gekrümmt ist, und dass ein Krümmungsradius der Wand (23c) im Wesentlichen gleich einem Krümmungsradius der Zahnräder (25a, 25b, 25c) ist.

3. Wasserkraftwerk nach Anspruch 2, **dadurch gekennzeichnet, dass** in der Mulde (23) die folgenden bereitgestellt sind:

- erste Gelenkelemente (23d) in einem oberen Teil der Mulde, die mit einem ersten Kettenbolzen (24a1) an ein Gelenk der geschlossenen Kette (24) gekoppelt sind

- zweite Gelenkelemente (23a, 23f) in einem unteren Teil der Mulde, die mit einem Gelenkbolzen (23b) drehbar mit der Mulde gekoppelt sind, und dass

- die zweiten Gelenkelemente des unteren Teils der Mulde so konfiguriert sind, dass sie mit einem zweiten Kettenbolzen (24a2) an die geschlossene Kette (24) gekoppelt werden, so dass, wenn die geschlossene Kette (24) den oberen oder unteren Totpunkt der Kette (24) passiert, die geschlossene Kette (24) so konfiguriert ist, dass sie gegen die gekrümmte Wand (23c) der Mulde (23) drückt.

4. Wasserkraftwerk nach Anspruch 2, **dadurch gekennzeichnet, dass** in der Mulde (23) die folgenden bereitgestellt sind:

- dritte Gelenkelemente (23d2) im oberen Teil der Mulde, die mit einem langen ersten Kettenbolzen (24a1b) an ein Gelenk der geschlossenen Ketten (24a, 24b, 24c) gekoppelt sind

- vierte Gelenkelemente (23a2, 23f2) im unteren Teil der Mulde, die mit einem langen Gelenkbolzen (23b2) drehbar mit der Mulde verbunden sind,
und das

- die vierten Gelenkelemente des unteren Teils der Mulde so konfiguriert sind, dass sie mit einem langen zweiten Kettenbolzen (24a3) an die geschlossenen Ketten (24a, 24b, 24c) gekoppelt werden, so dass beim Passieren der geschlossenen Ketten (24a, 24b, 24c) die oberen oder unteren Totpunkte der Ketten (24a, 24b, 24c) die geschlossenen Ketten (24a, 24b, 24c) so konfiguriert sind, dass sie gegen die gekrümmte Wand (23c) der Mulde (23) drücken.

5. Wasserkraftwerk nach Anspruch 1, **dadurch gekennzeichnet, dass** die Tragkonstruktionen (8a, 8b) für das Wasserkraftwerk (4) geschlossen sind, und dass in ihrem unteren Abschnitt ein Schmieröltank (9) vorgesehen ist, aus dem Schmieröl durch Schmierölversorgungselemente (9a, 9b) zu mindestens jedem Hilfszahnrad (29a, 29b) gepumpt werden kann.

6. Wasserkraftwerk nach Anspruch 1, **dadurch gekennzeichnet, dass** Kettenspannelemente (30, 32) mit der Welle (29b1) mindestens eines Hilfszahnrades (29b) oder einem separaten Tragbalken (31) der Welle (29b1) zum Klemmen der geschlossenen Ketten (24, 24a, 24b, 24c) beim Hochfahren der Mulden (23) gekoppelt sind.

7. Wasserkraftwerk nach Anspruch 1, **dadurch gekennzeichnet, dass** an einem zweiten Ende einer Versorgungswasserleitung (3) nach einem Betriebsleitungszweig (21) ein Bypassventil (3d) zum Leiten des zum Wasserkraftwerk (4) kommenden Wassers am Wasserkraftwerk (4) vorbei zum Abflussrohr (7) vorgesehen ist.

**Revendications**

1. Centrale hydroélectrique (4) pour convertir la pression hydrostatique de l'eau en énergie électrique, la centrale hydroélectrique (4) comprenant :

   - une conduite d'alimentation en eau (3)
   - deux structures de support (8a, 8b) pour la centrale hydroélectrique (4)
   - des auges (23) se déplaçant dans la même direction entre les structures de support (8a, 8b), les auges étant ouvertes d'un côté et conçues pour se déplacer en cercle fermé essentiellement dans le sens vertical, les auges étant conçues pour être remplies d'eau (2a) à un point mort haut du mouvement vertical des auges (23) et pour être évacuées de l'eau (2b) dans un point mort bas du mouvement vertical des auges
   - des moyens de support (23a, 23b, 23d, 24a1, 24a2) pour attacher une auge individuelle (23) de manière articulée à au moins deux chaînes parallèles (24a, 24b, 24c)
   - au moins deux chaînes parallèles (24a, 24b, 24c), des roues dentées parallèles (25a, 25b, 25c) et des arbres rotatifs (26a, 27a, 28a), dans laquelle les chaînes parallèles (24a, 24b, 24c) sont installées sur lesdites roues dentées parallèles (25a, 25b, 25c), qui sont installés de manière fixe sur lesdits arbres rotatifs (26a, 27a, 28a) de sorte que le mouvement vertical des chaînes parallèles (24a, 24b, 24c) est conçu pour faire tourner les roues dentées (25a, 25b, 25c) supportant celles-ci et lesdits arbres rotatifs (26a, 27a, 28a)
   - une première extrémité des arbres rotatifs (26a, 27a, 28a) est montée sur palier sur une première structure de support (8a) de la centrale hydroélectrique et une seconde extrémité sur une seconde structure de support (8b), et
   - un arbre de stator d'un générateur électrique (6) est fixé à au moins un arbre rotatif (26a, 27a, 28a), **caractérisée en ce qu'**au moins à la première extrémité de chaque arbre rotatif (26a, 27a, 28a) il est prévu des roues dentées de décharge de charge (26, 27, 28), qui sont conçues pour tourner ensemble au moyen de roues dentées auxiliaires (29a, 29b) pour réduire la charge des chaînes parallèles (24a, 24b, 24c) se déplaçant dans le sens vertical.

2. Centrale hydroélectrique selon la revendication 1, **caractérisée en ce qu'**une paroi (23c) est située contre les chaînes parallèles (24a, 24b, 24c) des auges (23) est incurvée, et **en ce qu'**un rayon de courbure de la paroi (23c) est essentiellement égal à un rayon de courbure des roues dentées (25a, 25b, 25c).

3. Centrale hydroélectrique selon la revendication 2, **caractérisée en ce qu'**il est prévu dans l'auge (23)

   - des premiers éléments articulés (23d) dans une partie supérieure de l'auge, qui sont couplés à une articulation de la chaîne fermée (24) avec un premier axe de chaîne (24a1)
   - des deuxièmes éléments articulés (23a, 23f) dans une partie inférieure de l'auge, qui sont couplés de manière rotative à l'auge avec un axe d'articulation (23b), et **en ce que**
   - les deuxièmes éléments articulés de la partie inférieure de l'auge sont conçus pour être couplés à ladite chaîne fermée (24) avec un second axe de chaîne (24a2) de sorte que, lorsque la chaîne fermée (24) passe par le point mort supérieur ou inférieur de la chaîne (24), la chaîne fermée (24) est conçue pour presser contre la paroi incurvée (23c) de l'auge (23).

4. Centrale hydroélectrique selon la revendication 2, **caractérisée en ce qu'**il est prévu dans l'auge (23)

   - des troisièmes éléments articulés (23d2) dans la partie supérieure de l'auge, qui sont couplés à une articulation des chaînes fermées (24a, 24b, 24c) avec un long premier axe de chaîne (24a1b)
   - des quatrièmes éléments articulés (23a2, 23f2) dans la partie inférieure de l'auge, qui sont couplés de manière rotative à l'auge avec un long axe d'articulation (23b2), et **en ce que**
   - les quatrièmes éléments articulés de la partie inférieure de l'auge sont conçus pour être couplés aux chaînes fermées (24a, 24b, 24c) avec un deuxième axe de chaîne long (24a3) de sorte que, lorsque les chaînes fermées (24a, 24b, 24c) passent par les points morts supérieurs ou inférieurs des chaînes (24a, 24b, 24c), les chaînes fermées (24a, 24b, 24c) sont conçues pour presser contre la paroi incurvée (23c) de l'auge (23).

5. Centrale hydroélectrique selon la revendication 1, **caractérisée en ce que** les structures de support (8a, 8b) pour la centrale hydroélectrique (4) sont fermées et **en ce qu'**il y a un réservoir d'huile de lubrification (9) prévu dans leur section inférieure, à partir duquel l'huile de lubrification est conçue pour être pompée vers au moins chaque roue dentée auxiliaire (29a, 29b) en lubrifiant des éléments d'alimentation en huile (9a, 9b).

6. Centrale hydroélectrique selon la revendication 1, **caractérisée en ce que** des éléments de serrage de chaîne (30, 32) sont couplés à l'arbre (29b1) d'au moins une roue dentée auxiliaire (29b) ou une poutre de support séparée (31) de l'arbre (29b1) pour serrer les chaînes fermées (24, 24a, 24b, 24c) pendant la montée des auges (23).

7. Centrale hydroélectrique selon la revendication 1, **caractérisée en ce qu'**à une seconde extrémité d'une conduite d'eau d'alimentation (3) après une branche de conduite de fonctionnement (21), il est prévu une vanne de dérivation (3d) pour diriger l'eau arrivant à la centrale hydroélectrique (4) au-delà de la centrale hydroélectrique (4) vers la conduite de décharge (7) .

**Fig. 1**

**Fig. 2b**

**Fig. 2a**

**Fig. 3**

**Fig. 4a**

**Fig. 4b**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011163247 A